Europäisches Patentamt

European Patent Office

Office européen des brevets

(19)

(11) EP 0 927 871 A1

(12) EUROPÄISCHE PATENTANMELDUNG

(43) Veröffentlichungstag:
07.07.1999  Patentblatt 1999/27

(51) Int. Cl.⁶: G01C 5/04

(21) Anmeldenummer: 98124687.9

(22) Anmeldetag: 24.12.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 29.12.1997 DE 29722517 U
17.06.1998 DE 29810799 U

(71) Anmelder: Rathkamp, Hans-Jürgen
26209 Kirchhatten (DE)

(72) Erfinder: Rathkamp, Hans-Jürgen
26209 Kirchhatten (DE)

(74) Vertreter:
Röther, Peter, Dipl.-Phys.
Patentanwalt
Vor dem Tore 16a
47279 Duisburg (DE)

(54) Vorrichtung zur Bestimmung von Höhendifferenzen

(57) Bei einer Vorrichtung zur Bestimmung von Höhendifferenzen zwischen dem aktiven Teil eines Werkzeugs oder einer Meßanordnung, und einer mittels Einrichtungen bekannter Art vorgegebenen horizontalen Ebene, ist erfindungsgemäß vorgesehen, daß zwischen dem Bereich des aktiven Teils des Werkzeugs oder der Meßanordnung und dem Bereich des Bezugspunktes und/oder dem Bereich der vorgegebenen horizontalen Ebene mindestens ein mit einer Flüssigkeit gefülltes, hinreichend bewegliches rohr- oder schlauchartiges Behälterelement angeordnet ist, das an seinem dem Bezugspunkt abgekehrten Ende mit einer Druckausgleichsmembran bekannter Art verschlossen ist und mit seinem anderen Ende in einen in der unmittelbaren Umgebung des Bezugspunktes ortsfest zu diesem installierten Drucksensor bekannter Art mündet, dessen Ausgangssignale als Maß für die zu bestimmenden Höhendifferenzen dienen und einer geeigneten Verarbeitungs- und/oder Anzeigeeinrichtung bekannter Art aufgegeben werden.

EP 0 927 871 A1

**Beschreibung**

Die Erfindung betrifft eine Vorrichtung zur Bestimmung von Höhendifferenzen gemäß den Merkmalen des Oberbegriffs des Anspruchs 1.

Solche Vorrichtungen werden gemäß dem Stand der Technik beispielsweise benötigt, um bei Erdaushub-Arbeiten mit entsprechenden Baggern von vornherein eine ebene horizontale Fläche unterhalb des ursprünglichen Geländeniveaus zu erzeugen oder aber um mittels Handhabungsautomaten Werkstücke derart in Serie zu handhaben und/oder zu bearbeiten, daß sie stets in derselben Höhe ergriffen und gehalten oder bearbeitet, beispielsweise gebohrt, genietet oder geschweißt, werden.

Bei Erdaushub-Arbeiten der vorgenannten Art ist es bisher bekannt, je nach Geländebeschaffenheit für mehrere Bagger zumindest einen oder für jeden Bagger je einen sogenannten Baulaser, d.h. eine mit einem um eine senkrechte oder gegebenenfalls auch eine gegen die Senkrechte mit vorgegebenem Winkel gekippte Drehachse umlaufenden Sender eines Laserstrahls versehene Lichtquelle, ortsfest im Gelände zu installieren und jeden Bagger an vorgegebenem Ort mit einem Empfänger für den ihm zugedachten Laserstrahl zu versehen. Dabei wird der Empfänger, der mit einem nur in eine Richtung orientierbaren Fenster oder auch mit einem 360°-Rundumempfang versehen sein kann, entweder auf dem Gehäuse des Baggers oder aber auf dem unmittelbar an das am Gehäuse des Baggers angelenkte - oberste - Glied des üblicherweise mehrgliedrigen Baggerarmes angeordnet. Zur Bestimmung der tatsächlichen Position der Baggerschneide in der auszuhebenden Geländevertiefung ist dann vom Baggerführer per Berufserfahrung ständig die Entfernung der Baggerschneide zum Empfänger in einer vorgegebenen Arbeitsstellung des Baggerarmes, beispielsweise bei einer Montage des Empfängers auf dem Gehäuse des Baggers die maximale Reichweite des Baggerarmes einschließlich der Baggerschaufel nach unten oder bei der Montage des Empfängers auf dem obersten Glied des Baggerarmes der senkrechte Abstand zwischen Empfänger und Baggerschneide, bei der Steuerung eines Aushubzyklus zu berücksichtigen. Dabei geben die herkömmlichen Empfänger selbst in den vorgegebenen Arbeitsstellungen nur an, ob sich der Bagger als Ganzes oder das oberste Glied des Baggerarmes und damit in beiden Fällen auch die Baggerschneide zu tief oder zu hoch oder im richtigen Bereich befinden - ganz abgesehen davon, daß diese Art von Positionsbestimmung der Baggerschneide schon dann gestört wird, wenn der Bagger nicht horizontal ausgerichtet, sondern in einer mehr oder weniger gekippten Stellung auf seinem Untergrund aufsteht. Darüber hinaus beträgt der vertikale Meßbereich der bekannten Empfänger maximal ± 150 mm um ihren theoretischen Nullpunkt, so daß der zugehörige Baulaser bei welligem Gelände häufig umgesetzt und dann die jeweilige externe Höhenänderung zu berücksichtigen ist - auch dann, wenn durch eine geschickte Aufstellung weitgehend verhindert wird, daß der Laserstrahl in bestimmten Arbeitssituationen des Baggers durch diesen selbst oder durch die Kante der auszuhebenden Geländevertiefung auf seinem Weg zum Empfänger zwangsläufig abgedeckt und damit eine Messung der Position des Baggers und damit auch seines Armes und der Baggerschneide von vornherein unmöglich wird. Wenn auf einer Großbaustelle für mehrere Bagger auch mehrere Baulaser aufgestellt werden, ist außerdem nicht eindeutig auszuschließen, daß sich die Signale der verschiedenen Baulaser gegenseitig stören und an einzelnen oder allen Baggern zu falschen Meßergebnissen führen.

Bei Handhabungsautomaten liegt häufig die Aufgabe vor, mittels eines oder mehrerer ein- oder mehrgliedriger Arme nicht nur Gegenstände oder Werkstücke ein- und derselben Art in stets gleicher Weise handhaben oder bearbeiten zu lassen, sondern Gegen-stände oder Werkstücke unterschiedlicher Abmessun-gen und unterschiedlicher Massen. Das führt dann jedoch zunächst zwangsläufig zu unterschiedlichen Belastungen der Arme solcher Handhabungsautomaten und damit auch zu unterschiedlichen Durchbiegungen dieser Arme, was seinerseits zusätzliche Maßnahmen erfordert, um unterschiedliche Gegenstände oder Werkstücke auf eine vorgegebene Höhe transportieren zu können oder unterschiedliche Werkzeuge an einer jeweils vorgegebenen Höhe eines Werkstückes angreifen zu lassen. Üblicherweise haben sich solche zusätzlichen Maßnahmen in der Form herausgebildet, daß einerseits eine ausreichende Zahl von mechanischen, elektromechanischen, elektromagnetischen oder optischen Sensoren zur Messung jedweder unerwünschter Abweichungen der Bewegungen des Handhabungsautomaten von vorgegebenen Sollwerten vorgesehen wird, deren Signale über eine - vorzugsweise programmierbare - umfangreiche Steuer- und Regeleinrichtung und zugehörige Stellglieder entsprechende Korrekturen der vorgenannten Bewegungen verursachen, und andererseits sehr aufwendige Konstruktionen sowohl der Gelenke als auch der einzelnen Glieder jedes mehrgliedrigen Armes eines Handhabungsautomaten eingesetzt werden, die jeweils auf die überhaupt nur denkbare Maximalbelastung ausgelegt sind.

Unsicherheiten der exakten Bestimmung einer Höhendifferenz im vorgenannten Sinne ergeben sich auch beim Ablassen der aktiven Teile von Meßanordnungen in nicht durchgehend vertikal verlaufende Geländevertiefungen, beispielsweise von Gasanalysegeräten in sich in wechselnde Richtungen erstreckende Schacht- und/oder Höhlensysteme, oder in Strömungen und/oder Wirbel aufweisende Flüssigkeiten, beispielsweise von Senkkörpern zur schichtweisen Dichtebe-stimmung in den Inhalt von Klärbecken. Dasselbe gilt auch schon für die exakte Bestimmung der Höhendifferenz zwischen einem Kranhaken und einem vorgegebenen Bezugspunkt in oder an dessen Führerstand oder auf dem - ggf. nicht oder nur teilweise einsehbaren - Arbeitsfeld eines solchen Kranes.

Aufgrund der vorliegenden Ausführungen liegt der vorliegenden Erfindung nun die Aufgabe zugrunde, eine Vorrichtung zur Bestimmung von Höhendifferenzen zur Verfügung zu stellen, mit der auf einfache Weise und mittels einer einfachen Konstruktion eine kontinuierliche eindeutige vertikale Entfernungsmessung zwischen dem aktiven Teil eines Werkzeugs oder einer Meßanordnung, das oder die steuerbar an einem mindestens in einer vertikalen Ebene willkürlich verfahrbaren und an einem feststehenden oder ebenfalls verfahrbaren Gehäuse angelenkten ein- oder mehrgliedrigen Arm angeordnet ist, und einer mittels Einrichtungen bekannter Art vorgegebenen horizontalen Ebene, die durch einen am Gehäuse oder in definierter räumlicher Zuordnung außerhalb von diesem vorgegebenen Bezugspunkt hindurch- oder in meßbarem senkrechtem Abstand an ihm vorbeiführt, ermöglicht wird, wobei das Ergebnis dieser Messung in ebenfalls einfacher Weise zur Betätigung des vorgenannten Werkzeugs oder einer Meßanordnung in der vorgegebenen Raum-Zeit-Koordination heranziehbar ist.

Die Erfindung löst diese Aufgabe mit Hilfe der Gesamtheit der Merkmale des Anspruchs 1.

Dabei erweist es sich als besonders vorteilhaft, daß zwischen dem Bereich des aktiven Teils des Werkzeugs oder der Meßanordnung und dem Bereich des Bezugspunktes und/oder dem Bereich der vorgegebenen horizontalen Ebene mindestens ein mit einer Flüssigkeit gefülltes, hinreichend bewegliches rohr- oder schlauchartiges Behälterelement angeordnet ist, das an seinem dem Bezugspunkt abgekehrten Ende mit einer Druckausgleichsmembran bekannter Art verschlossen ist und mit seinem anderen Ende in einen in der unmittelbaren Umgebung des Bezugspunktes ortsfest zu diesem installierten Drucksensor bekannter Art mündet, dessen Ausgangssignale als Maß für die zu bestimmenden Höhendifferenzen dienen und einer geeigneten Verarbeitungs- und/oder Anzeigeeinrichtung bekannter Art aufgegeben werden, weil eine solche Vorrichtung gestattet, jederzeit mittels einer speziellen Anwendungsform des Prinzips des hydrostatischen Druckes den vertikalen Abstand des aktiven Teils eines Werkzeugs oder einer Meßanordnung von einer vorgegebenen horizontalen Ebene präzise zu bestimmen, auch wenn dieser aktive Teil eines Werkzeugs, worunter hier nicht nur Bearbeitungsgeräte im eigentlichen Sinne, sondern auch jegliche Art von Handhabungsgeräten, beispielsweise mechanische oder pneumatische Greifer, zu verstehen sind, oder einer Meßanordnung normalerweise während seines bzw. ihres Betriebes nicht unmittelbar zugänglich ist, sondern entweder von einem Bediener oder von einer halbautomatischen oder automatischen - vorzugsweise programmierbaren - Steuer- und Regeleinrichtung ferngesteuert wird. Dabei sorgt die Druckausgleichsmembran vorteilhafterweise dafür, daß nach einer einmaligen Eichung des Zusammenhangs zwischen dem jeweiligen senkrechten Abstand der Ebene der Druckausgleichsmembran von derjenigen des Drucksensors sowohl nach oben als auch nach unten und dem Wert des dabei vom Drucksensor erzeugten Ausgangssignals als Maß für die momentane Druckdifferenz zwischen dem Ort der Drucksausgleichsmembran und dem Ort des Drucksensors der Druck der Flüssigkeitssäule am Ort der Druckausgleichsmembran stets mit dem Atmosphärendruck der Umgebung oder einem mit Mitteln bekannter Art willkürlich vorgebbaren Gegendruck, der dann selbstverständlich auch bei der Erzeugung und/oder Auswertung der Ausgangssignale des Drucksensors berücksichtigt wird, im Gleichgewicht steht und Volumenänderungen der Flüssigkeit und/oder des rohr- oder schlauchartigen Behälterelements durch Temperatureinflüsse oder geringfügige Verformungen des rohr- oder schlauchartigen Behälterelements bei den Bewegungen eines Armes weitgehend kompensiert werden, so daß die Eichung über lange Zeit ihre Gültigkeit behält. Versuche haben ergeben, daß die Genauigkeit der Bestimmung von Höhendifferenzen mit einer erfindungsgemäßen Vorrichtung

$$\frac{\Delta h}{h} = \pm\,0{,}3\ \%$$

beträgt, d.h. bei einer Höhendifferenz zwischen Drucksensor und - im Versuchsfall tieferliegender - Druckausgleichsmembran von h = 3 m beträgt die mögliche Abweichung $\Delta h = \pm\,0{,}9\ cm$. Dabei weist die vorliegende Anordnung den weiteren Vorteil auf, daß keine zusätzliche Signalleitung parallel zum rohr- oder schlauchartigen Behälterelement erforderlich ist, die die Ausgangssignale eines Drucksensors erst vom eigentlichen Ort der Messung in den Bereich der Verarbeitungs- und/oder Anzeigeeinrichtung transportieren muß und dabei einen zusätzlichen Störfaktor und/oder Gefährdungsbereich der Gesamtvorrichtung darstellt. Das Ausgangssignal jedes Drucksensors kann vorteilhafterweise mittels der jeweiligen Verarbeitungs- und/oder Anzeigeeinrichtung in jeder Form bekannter Art weiterverarbeitet werden, beispielsweise zu einer digitalen Längenangabe mit oder ohne Einschluß des jeweils durch separate Messung oder konstante Vorgabe bekannten Abstandes zwischen einem oder mehreren Drucksensoren und der vorgegebenen horizontalen Ebene auf einem deutlich ablesbaren Display oder zu einem Steuersignal für eine - vorzugsweise programmierbare - halbautomatische oder automatische Steuer- und Regeleinrichtung für die Betätigung des Werkzeugs oder einer Meßanordnung.

Als sehr vorteilhafte Ausführungsform der erfindungsgemäßen Vorrichtung ist auch eine solche anzusehen, bei der die horizontale Ebene mittels eines ortsfest im Gelände aufgeständerten Baulasers bekannter Art definiert wird und das Gehäuse Bestandteil einer in diesem Gelände verfahrbaren Arbeitsmaschine ist, die mit einer senkrecht zu ihrer Aufstandsfläche automatisch dem Lasersignal nachfahrenden Empfangseinrichtung ebenfalls bekannter Art versehen ist, wobei diese Empfangseinrichtung starr mit dem Drucksensor verbunden ist, der das einzige rohr- oder schlauchartige Behälterelement zwischen dem Bereich des aktiven Teils des Werkzeugs und dem Bereich des in ortsfester räumlicher Zuordnung zur Empfangseinrichtung vorausgesetzten Bezugspunkts in dessen unmittelbarer Umgebung abschließt, da in diesem Fall jederzeit die senkrechte Entfernung zwischen einem an einer im Gelände verfahrbaren Arbeitsmaschine angeordneten Werkzeug bzw. dessen aktivem Teil, beispielsweise der Baggerschneide eines für den Erdaushub einsetzbaren Baggers, und einer durch einen Baulaser bekannter Art vorgegebenen horizontalen Ebene derart meßbar und auswertbar ist, daß z.B. ein Baggerführer kontinuierlich auf einem deutlich sichtbaren Display die jeweilige tatsächliche Höhendifferenz zwischen Baggerschneide und vorgegebener Ebene ablesen und den Bagger dann beispielsweise so steuern kann, daß dieser von vornherein ebenfalls eine horizontale Ebene in einer auszuhebenden Geländevertiefung erzeugt. Dabei gestattet die nachfahrbare Empfangseinrichtung vorteilhafterweise außerdem, daß der Baulaser auch bei einem nicht ebenen Gelände zur Aufrechterhaltung der Sichtverbindung zwischen sich und der Empfängereinrichtung auf der Arbeitsmaschine nur noch in seltenen Ausnahmefällen während des Aushubs einer einzelnen Geländevertiefung umgesetzt und neu eingerichtet werden muß, da die Grenzen des Nachfahrbereiches im wesentlichen nur durch die Länge einer auf der Arbeitsmaschine zu installierenden Schiene und/oder Antriebsvorrichtung, beispielsweise eines Spindel- oder Kettenantriebs, festgelegt werden.

Bei einer anderen Ausführungsform der vorliegenden Vorrichtung erweist es sich dagegen als sehr vorteilhaft, wenn die horizontale Ebene mittels eines ortsfest im Gelände aufgeständerten Baulasers bekannter Art definiert wird und das Gehäuse Bestandteil einer in diesem Gelände verfahrbaren Arbeitsmaschine ist, die mit einer senkrecht zu ihrer Aufstandsfläche automatisch dem Lasersignal nachfahrenden Empfangseinrichtung ebenfalls be-kannter Art versehen ist, wobei diese Empfangseinrichtung starr mit der Druckausgleichsmembran verbunden ist, die ein zwischen dem Bereich eines an geeigneter Stelle zwischen Werkzeug und Empfangseinrichtung vorausgesetzten Bezugspunkts und dem Bereich der Empfangseinrichtung angeordnetes zweites rohr- oder schlauchartiges Behälterelement an einem seiner Enden verschließt, während dessen anderes Ende im Bereich des Bezugspunkts in der Nachbarschaft eines ein erstes, vom aktiven Teil eines Werkzeugs kommendes rohr- oder schlauchartiges Behälterelement abschließenden Drucksensors in einen weiteren Drucksensor bekannter Art mündet, dessen Ausgangssignale ebenfalls der Verarbeitungs- und/oder Anzeigeeinrichtung aufgegeben werden, weil dies einerseits gestattet, alle Drucksensoren gemeinsam mit der Verarbeitungs- und/oder Anzeigeeinrichtung an einem besonders gut geschützten Ort auf der Arbeitsmaschine, beispielsweise in deren Fahrerkabine, anzuordnen und andererseits die Gesamtlänge des rohr- oder schlauchartigen Behälterelements in zwei Teilstücke aufzutrennen, um so die Maximalbelastung jeder Druckausgleichsmembran zu reduzieren oder in jedem Teilstück des rohr- oder schlauchartigen Behälterelements eine Flüssigkeit höherer Dichte zu verwenden und damit eine höhere Empfindlichkeit der erfindungsgemäßen Vorrichtung zu erzielen.

Als sehr vorteilhaft erweist sich auch eine Ausführungsform der vorliegenden Vorrichtung, bei der die horizontale Ebene durch einen horizontal planierten und befestigten Untergrund verifiziert wird und das Gehäuse Bestandteil eines auf diesem Untergrund verfahrbaren Handhabungsautomaten ist, dessen starr an den Drucksensor gekoppelter Bezugspunkt mittels eines oder mehrerer mechanischer, elektromechanischer, elektromagnetischer oder optischer Sensoren bekannter Art am Gehäuse auf eine durch das zu handhabende oder zu bearbeitende Werkstück vorgegebene horizontale Vergleichsebene verfahrbar ist, weil ein solcher Handhabungsautomat auch bei unterschiedlichen Belastungen seiner ein- oder mehrgliedrigen Arme durch wechselnde zu tragende Werkzeuge oder Werkstücke in jedem Falle auf einfache Art und Weise stets in vorgeschriebener Höhe an einem zu handhabenden oder zu bearbeitenden Werkstück, unter dem hier auch jeder Gegenstand verstanden werden soll, der nicht im eigentlichen Sinne bearbeitet, sondern nur transportiert werden soll, angreifen kann - selbst dann, wenn die einzelnen Glieder und Gelenke der Arme nur verhältnismäßig einfach und kostengünstig aufgebaut sind und daher bei unterschiedlichen Belastungen auch unterschiedliche Durchbiegungen des jeweiligen Armes bewirken. Vorteilhafterweise kann hier zumindest in einer Vielzahl von Fällen zur Verfahrung des Bezugspunktes in eine durch das zu handhabende oder zu bearbeitende Werkstück vorgegebene horizontale Vergleichsebene einer oder mehrere der bei einem verfahrbaren Handhabungsautomaten sowieso vorhandenen Sensoren zur jeweiligen Positionierung des Handhabungsautomaten gegenüber mindestens zwei unterschiedlichen Lager- und/oder Bearbeitungsstationen mitverwendet werden, insbesondere dann, wenn in vorteilhafter Weise die durch das zu handhabende oder zu bearbeitende Werkstück vorgegebene horizontale Vergleichsebene durch dessen Unter- oder Oberkante verläuft.

Bei einer weiteren Ausführungsform der in Rede stehenden Vorrichtung ist es dagegen als Vorteil anzusehen, daß der Sensor Bestandteil eines starr mit dem Drucksensor verbundenen und mit diesem am Gehäuse verfahrbaren Auslegerarms ist, der die durch das zu handhabende oder zu bearbeitende Werkstück vorgegebene horizontale Vergleichsebene mittels mechanischer Berührung des Werkstücks oder der dieses tragenden Elemente einer Lager- oder Bearbeitungsstation ermittelt, da dies eine konstruktiv einfache und kostengünstige Lösung darstellt, um nach der Positionierung eines verfahrbaren Handhabungsautomaten vor einer Lager- oder Bearbeitungsstation durch senkrechtes Verfahren eines mit einem einfachen Kontaktschalter oder einem entsprechenden Sensor gleichwirkender Art versehenen Auslegerarmes aus einer geeigneten Ruheposition an die Unter- oder Oberkante des Werkstücks oder an eine relevante Kante oder Fläche der das Werkstück tragenden Elemente der Lager- oder Bearbeitungsstation, beispielsweise auf einen Bereich einer starren Aufstandsfläche für das Werkstück, eine eindeutige Festlegung des Bezugspunktes für die anschließende Betätigung des aktiven Teils eines Werkzeugs in einer vorgegebenen Höhe zu erreichen.

Als sehr vorteilhaft erweist sich bei einer anderen Ausführungsform der erfindungsgemäßen Vorrichtung auch, daß die horizontale Ebene durch einen horizontal planierten und befestigten Untergrund verifiziert wird und das Gehäuse Bestandteil eines ortsfest auf diesem Untergrund montierten Handhabungsautomaten ist, wobei als starr an den Drucksensor gekoppelter Bezugspunkt ein willkürlich festlegbarer Ort an oder auf einer ebenfalls auf dem vorgenannten Untergrund in der Nachbarschaft des Handhabungsautomaten ortsfest angeordneten Lager- oder Bearbeitungsstation für zu handhabende oder zu bearbeitende Werkstücke dient, der mindestens für eine Serie solcher Werkstücke eine von diesen jeweils vorgegebene horizontale Vergleichsebene charakterisiert, da eine solche Vorrichtung ebenfalls gewährleistet, daß der Handhabungsautomat bei unterschiedlichen Belastungen und dadurch bedingten Durchbiegungen seiner Arme stets in gleicher vorgegebener Höhe an einem Werkstück angreift - insbesondere auch dann, wenn die einzelnen Glieder und Gelenke der Arme nur verhältnismäßig einfach und kostengünstig aufgebaut sind. Dabei erübrigt sich im vorliegenden Fall allerdings die Notwendigkeit, bei jedem Arbeitszyklus des Handhabungsautomaten die vorgegebene horizontale Vergleichsebene erneut mit dem Bezugspunkt in Übereinstimmung zu bringen, da bei einer räumlich unveränderlichen Anordnung von Handhabungsautomat und Lager- oder Bearbeitungsstation der Bezugspunkt und damit die Position des Drucksensors der Einfachheit halber zumindest für jede Serie gleicher Werkstücke an einem festgelegten Ort an oder auf der Lager- oder Bearbeitungsstation angeordnet werden kann. Dies kann beispielsweise in vorteilhafter Weise dadurch geschehen, daß die durch die zu handhabenden oder zu bearbeitenden Werkstücke vorgegebene horizontale Vergleichsebene durch deren Unter- oder Oberkante verläuft, und insbesondere in der Weise, daß der Bezugspunkt ein Ort auf einem starren Bereich in der Aufstandsebene der zu handhabenden oder zu bearbeitenden Werkstücke innerhalb der jeweiligen Lager- oder Bearbeitungsstation ist, wobei dieser starre Bereich gleichzeitig den Drucksensor ortsfest hält und trägt.

Bei einer anderen Ausführungsform der erfindungsgemäßen Vorrichtung ist es dagegen als sehr vorteilhaft anzusehen, daß das rohr- oder schlauchartige Behälterelement als von einer Trommel ausreichenden Durchmessers ab- bzw. auf eine solche aufwickelbar ausgeführt ist, wobei das ab- und aufwickelbare Ende des rohr- oder schlauchartigen Behälterelements durch eine Druckausgleichsmembran abgeschlossen wird, da dies auf einfache Weise gestattet, beispielsweise die Höhendifferenz eines Kranhakens gegenüber dem Führerstand des Krans auch bei Schwingungen des belasteten Kranseils und/oder bei verdecktem Arbeitsfeld oder aber die Absenktiefe eines in ein Klärbecken abgelassenen Senkkörpers zur Ermittlung der dort herrschenden schichtweisen Dichteverteilung auch bei vorhandenen Strömungen und/oder Wirbeln der - normalerweise trüben - Klärbeckenflüssigkeit jederzeit exakt zu bestimmen. Eine solche Bestimmung von Höhendifferenzen wird darüber hinaus in vorteilhafter Weise noch wesentlich erleichtert, wenn außerdem der Drucksensor in oder an der Trommel angeschlagen ist.

Als vorteilhaft erweist sich auch eine Ausführungsform der in Rede stehenden Vorrichtung, bei der zur Füllung des rohr- oder schlauchartigen Behälterelements eine Flüssigkeit mit einer Dichte von $\rho > 1 \text{ g.cm}^{-3}$ verwendet wird, da damit wegen der größeren Änderung des Gewichts der die Ebene des Drucksensors überstehenden oder von dieser nach unten hängenden Flüssigkeitssäule bei einer Änderung des Abstandes zwischen der Ebene der Druckausgleichsmembran und derjenigen des Drucksensors in jedem Fall eine größere Empfindlichkeit der Vorrichtung für die Bestimmung von Höhendifferenzen erreicht wird. Darüber hinaus nimmt im allgemeinen mit zunehmender Dichte einer Flüssigkeit die Größe von deren Molekülen und damit - unbeschadet der Tatsache, daß die physikalischen Stoffkonstanten stets individuell zu bestimmende Größen sind - auch deren Dampfdruck und dessen Temperaturabhängigkeit ab, so daß mit einer Flüssigkeit höherer Dichte von vornherein die Ausbildung eines die vorgesehene Höhendifferenzbestimmung negativ beeinflussenden Dampfpolsters vor dem Drucksensor oder der Druckausgleichsmembran weitgehend vermieden werden kann. In Abhängigkeit von der zu erwartenden maximalen Höhe der zu erzeugenden Flüssigkeitssäule und damit der maximalen Belastung der jeweiligen Druckausgleichsmembran haben sich dabei, auch wegen der zusätzlichen Forderung nach einer möglichst geringen Temperaturabhängigkeit der Wärmeausdehnung und der Viskosität in den üblichen Arbeitsbereichen, insbesondere ölartige Flüssigkeiten oder - für sehr genaue Höhenbestimmungen in kurzen Differenzbereichen - flüssige Metalleutektika als besonders brauchbar erwiesen. Für die Messung größerer Höhendifferenzen mit ausreichender Genauigkeit empfiehlt sich dabei beispielsweise Silikonöl mit einer Dichte von $\rho \approx 1{,}07\ g \cdot cm^3$, für genaue Messungen von Höhendifferenzen im Bereich weniger Meter Fluorsilicon-Öl mit einer Dichte von $\rho \approx 1{,}88\ g \cdot cm^{-3}$ und für sehr genaue Messungen kleinerer Höhendifferenzen ein flüssiges Metalleutektikum mit einer Dichte von $\rho \approx 7{,}6\ g \cdot cm^{-3}$. Diese Auswahl ist allerdings nicht zwingend und schließt insbesondere auch nicht aus, für die Messung besonders großer Höhendifferenzen auch eine Flüssigkeit mit einer Dichte von $\rho < 1\ g \cdot cm^{-3}$ zu verwenden, beispielsweise pflanzliches Rapsöl mit einer Dichte von $\rho \approx 0{,}75\ g \cdot cm^{-3}$, das darüber hinaus auch dann empfehlenswert ist, wenn eine erfindungsgemäße Vorrichtung in einem ökologisch empfindlichen Bereich zur Anwendung kommen soll, beispielsweise in der Nahrungs- und Genußmittelindustrie.

Bei einer Weiterbildung der erfindungsgemäßen Vorrichtung ist es auch als sehr vorteilhaft anzusehen, daß das rohr- oder schlauchartige Behälterelement ein Metallrohr ist, da eine solche Ausführung eines mit einer Flüssigkeit gefüllten, hinreichend beweglichen rohr- oder schlauchartigen Behälterelements zwar vor und während der Montage an der jeweiligen Vorrichtung einige zusätzliche Maßnahmen für die langfristige Sicherstellung der erforderlichen Beweglichkeit erfordert, dafür jedoch von vornherein einen großen Eigenwiderstand gegen äußere Beschädigungen aufweist.

Als vorteilhaft ergibt sich bei einer anderen Ausführungsform der vorliegenden Vorrichtung auch, daß Innen- und Außendurchmesser des Metallrohres so gewählt werden, daß einerseits das Metallrohr bei ausreichender Festigkeit und Stabilität hinreichend bewegbar ist und andererseits bei einer minimalen Menge an Flüssigkeit sowohl das problemlose vollständige Befüllen des Metallrohres mit dieser als auch das Nichtauftreten von Störungen der zu messenden Druckdifferenzen durch Einflüsse von Kapillarkräften sichergestellt wird, weil dies einerseits nicht nur Material für Metallrohr und Flüssigkeit einspart, sondern auch die Beweglichkeit des Metallrohres bei gleichzeitiger Verringerung seines Platzbedarfes, insbesondere bei der Integration von spiralförmigen Bewegungshilfen in dieses erhöht und damit auch eventuell notwendige Installationen von Schutzabdeckungen - zumindest in einzelnen Bereichen - erleichtert und andererseits die ungestörte Bestimmung von Höhendifferenzen sicherstellt.

Eine vorteilhafte Weiterbildung der erfindungsgemäßen Vorrichtung liegt auch dann vor, wenn das Metallrohr vor dem Befüllen mit Flüssigkeit evakuiert wird, da dies einerseits das Auftreten eines die Messung negativ beeinflussenden Luftpolsters vor dem Drucksensor oder der Druckausgleichsmembran verhindert und außerdem die Befüllung des Metallrohres mit der Flüssigkeit erleichtert.

Als vorteilhaft ist auch eine Ausführungsform der vorliegenden Vorrichtung anzusehen, bei der das Metallrohr jederzeit im wesentlichen parallel zum Arm verläuft, weil auf diese Weise sichergestellt wird, daß das Metallrohr keine unkontrollierten Bewegungen im Raum ausführen kann, die gegebenenfalls entweder Beschädigungen des Metallrohrs selbst und damit einen Ausfall der gesamten Vorrichtung zur Bestimmung von Höhendifferenzen oder aber Beschädigungen von Gegenständen in der Umgebung oder Verletzungen von Personen in der Umgebung einer eine erfindungsgemäße Vorrichtung tragenden Arbeitsmaschine oder - einrichtung verursachen. Dabei wird die parallele Verlegung des Metallrohrs zum Arm dann in besonders vorteilhafter Weise unterstützt, wenn das Metallrohr an den Gelenken des Armes jeweils einen um die Drehachse des Gelenkes verlaufenden spiralförmig ausgebildeten Abschnitt hinreichender Länge und Windungszahl sowie hinreichendem Windungsdurchmesser aufweist.

Erfindungsgemäße Vorrichtungen auf verfahrbaren Arbeitsmaschinen lassen sich insbesondere dann in vorteilhafter Weise realisieren, wenn das Metallrohr in der Nachbarschaft des starr mit der Empfangseinrichtung verbundenen Drucksensors oder der starr mit der Empfangseinrichtung verbundenen Druckausgleichsmembran derart geformt ist, daß es die dem Lasersignal folgenden Bewegungen der Empfangseinrichtung nicht behindert, und insbesondere dann, wenn das Metallrohr in der Nachbarschaft des Drucksensors oder der Druckausgleichsmembran als spiralförmig ausgebildeter Abschnitt mit hinreichender Länge und Windungszahl sowie hinreichendem Windungsdurchmesser geformt ist.

Eine vorteilhafte Ausführungsform der vorliegenden Vorrichtung ist auch dann gegeben, wenn das rohr- oder schlauchartige Behälterelement ein Kunststoffschlauch geeigneter Festigkeit, Flexibilität, Temperaturstabilität und Gasundurchlässigkeit ist, weil dies einerseits von vornherein eine ausreichende Beweglichkeit des rohr- oder schlauchartigen Behälterelements bei seiner Mitnahme durch die unterschiedlichen Bauelemente der in Rede stehenden Vorrichtungen bei linearen, Schwenk- oder Auf- und Abrollbewegungen erwarten läßt und andererseits auch die Befüllung jedes rohr- oder schlauchartigen Behälterelements mit der zur Höhenbestimmung erforderlichen Flüssigkeit wesentlich erleichtert.

Bei einer Weiterbildung der in Rede stehenden Vorrichtung erweist es sich darüber hinaus als Vorteil, daß mindestens eine der Druckausgleichsmembranen auf ihrer der Flüssigkeit abgekehrten Seite mit einer druckdichten hohlkörperförmigen Abdeckung versehen ist, deren Innenraum mit einem unter Druck stehenden gasförmigen oder flüssigen Medium beaufschlagbar ist, wobei der so auf die Druckausgleichsmembran ausgeübte Gegendruck gleichzeitig auch dem zugehörigen Drucksensor und/oder der zu diesem gehörenden Verarbeitungs- und/oder Anzeigeeinrichtung in bekannter Art und Weise als meßbarer und/oder rechnerisch zu verarbeitender Referenzwert zur Verfügung gestellt wird, da dies einerseits bei gleichbleibender Belastung der jeweiligen Druckausgleichsmembran die Verwendung längerer rohr- oder schlauchartiger Behälterelemente und damit die exakte Bestimmung größerer Höhenunterschiede zuläßt und andererseits auch bei höheren Umgebungstemperaturen sowohl die Ausbildung von internen Gasblasen durch Verdampfung der Flüssigkeit im Behälterelement als auch das Eindringen von externen Gasmolekülen durch die Wand des Behälterelements in die Flüssigkeit verhindert. Dabei läßt sich diese Weiterbildung der erfindungsgemäßen Vorrichtung in besonders vorteilhafter Weise realisieren, wenn das unter Druck stehende gasförmige oder flüssige Medium Druckluft ist und wenn außerdem der Innenraum einer Abdeckung über eine separate Leitung mit einer Quelle eines unter Druck stehenden Mediums verbunden ist und darüber hinaus auch noch die Quelle steuer- und regelbar ausgebildet ist, da dann in jedem Fall nur Zusatzeinrichtungen und Installationselemente bekannter Art zur Anwendung kommen müssen und außerdem eine flexible Anpassung jeder in Rede stehenden Vorrichtung an die unterschiedlichsten Betriebsbedingungen erreichbar ist.

Eine besonders vorteilhafte Ausführungsform der vorliegenden Vorrichtung liegt auch dann vor, wenn die Innenräume von Abdeckungen mindestens zweier Druckausgleichsmembranen ein und derselben Vorrichtung der in Rede stehenden Ausführungen mit derselben Quelle verbunden und die zugehörigen Drucksensoren zu einer einzigen Druckdifferenz-Meßeinrichtung zusammengefaßt oder durch eine solche ersetzt sind, weil dies beispielsweise gestattet, mittels zweier unabhängig voneinander über eine Druckdifferenz-Meßeinrichtung gegeneinandergeschalteter Behälterelemente der vorgenannten Art bei beliebig, aber zweckmäßig, beispielsweise in einem geschützten Fahrerhaus, zwischen den Behälterelementen angeordneter Druckdifferenz-Meßeinrichtung eine eindeutige Zuordnung zwischen Druckdifferenz und Höhendifferenz zwischen den beiden zu den Behälterelementen gehörenden Druckausgleichsmembranen zu erzielen, da sich sowohl der - identische - Gegendruck an den beiden Druckausgleichsmembranen als auch die Teillängen der beiden Behälterelemente bei der Druckdifferenz-Bestimmung rechnerisch kompensieren und die Druckdifferenz nur von der Dichte der verwendeten Flüssigkeit, der Erdbeschleunigung und der tatsächlichen Höhendifferenz zwischen den beiden Druckausgleichsmembranen abhängt.

Eine insbesondere hinsichtlich der erforderlichen Installation und Wartung als besonders vorteilhaft zu erkennende Weiterbildung der in Rede stehenden Vorrichtung ist zusätzlich dadurch zu erreichen, daß jede separate Leitung ebenfalls durch einen Kunststoffschlauch geeigneter Festigkeit, Flexibilität, Temperaturstabilität und Gasundurchlässigkeit verwirklicht wird, und insbesondere dann, wenn außerdem die die rohr- oder schlauchartigen Behälterelemente und die separaten Leitungen ausbildenden Kunststoffschläuche als einteilige Doppelleitung ausgebildet sind und verlegt werden, wobei jede der beiden parallelen Leitungsbahnen an jeder gewünschten Stelle separat mit Ein- oder Ausgängen weiterer Bestandteile der Vorrichtung verbindbar ist. Die vorgenannte Höhendifferenz-Bestimmung aus der Druckdifferenz-Bestimmung zweier unabhängig über eine Druckdifferenz-Meßeinrichtung gegeneinandergeschalteter Behälterelemente ist selbstverständlich auch dann durchführbar, wenn die rohr- oder schlauchartigen Behälterelemente als Metallrohre ausgebildet sind und/oder der Gegendruck an den beiden zugehörigen Druckausgleichsmembranen der Atmosphärendruck ist.

Eine vorteilhafte Weiterbildung der in Rede stehenden Vorrichtung ist auch dann gegeben, wenn die Verarbeitungs- und/oder Anzeigeeinrichtung aus jedem Ausgangssignal eines Drucksensors eine deutlich ablesbare digitale Längenangabe mit oder ohne Einschluß des jeweils durch separate Messung oder konstante Vorgabe bekannten Abstandes zwischen einem oder mehreren Drucksensoren und der vorgegebenen horizontalen Ebene auf einem Display im oder am Gehäuse erzeugt, weil es damit möglich wird, dem Maschinenführer einer mit einer erfindungsgemäßen Vorrichtung versehenen Arbeitsmaschine oder -einrichtung jederzeit eine zuverlässige Vorgabe für die von ihm vorzunehmende Steuerung des Werkzeugs zur Verfügung zu stellen.

Bei einer anderen Ausführungsform der vorliegenden Vorrichtung ist es dagegen als vorteilhaft anzusehen, daß die Verarbeitungs- und/oder Anzeigeeinrichtung aus jedem Ausgangssignal eines Drucksensors separat oder parallel zu einer Digitalanzeige auf einem Display ein Steuersignal für eine halbautomatische oder automatische Steuer- und Regeleinrichtung für die Betätigung des Werkzeugs oder einer Meßanordnung erzeugt, da dies gestattet, die in Rede stehende Vorrichtung auch dann zweckgerichtet einzusetzen, wenn die sie tragende Arbeitsmaschine oder -einrichtung ohne ständiges Bedienungspersonal betrieben werden soll, wobei dies insbesondere dann von Vorteil ist, wenn die Steuer- und Regeleinrichtung programmierbar ist.

Anwendungsbeispiele der erfindungsgemäßen Vorrichtung sind in der Zeichnung dargestellt.

Es zeigen:

Fig. 1:   Prinzipieller Aufbau einer erfindungsgemäßen Vorrichtung zur Bestimmung von Höhendifferenzen in schematischer Darstellung.

Fig. 2: Verwendung einer erfindungsgemäßen Vorrichtung zur Bestimmung von Höhendifferenzen beim Aushub einer ebenen Geländevertiefung mittels eines Baggers in teilweise schematischer Darstellung.

Fig. 3: Verwendung einer erfindungsgemäßen Vorrichtung zur Bestimmung von Höhendifferenzen zur Steuerung des Werkzeugs eines auf einem ebenen Untergrund zwischen mindestens zwei Lager- und/oder Bearbeitungsstationen verfahrbaren Handnabungsautomaten in schematischer Darstellung.

Fig. 4 Verwendung einer erfindungsgemäßen Vorrichtung zur Bestimmung von Höhendifferenzen zur Steuerung des Werkzeugs eines ortsfest gegenüber einer Lager- und/oder Bearbeitungsstation installierten Handhabungsautomaten in schematischer Darstellung.

Fig. 5: Prinzipieller Aufbau einer weiteren Ausführungsform der erfindungsgemäßen Vorrichtung zur Bestimmung von Höhendifferenzen in schematischer Darstellung.

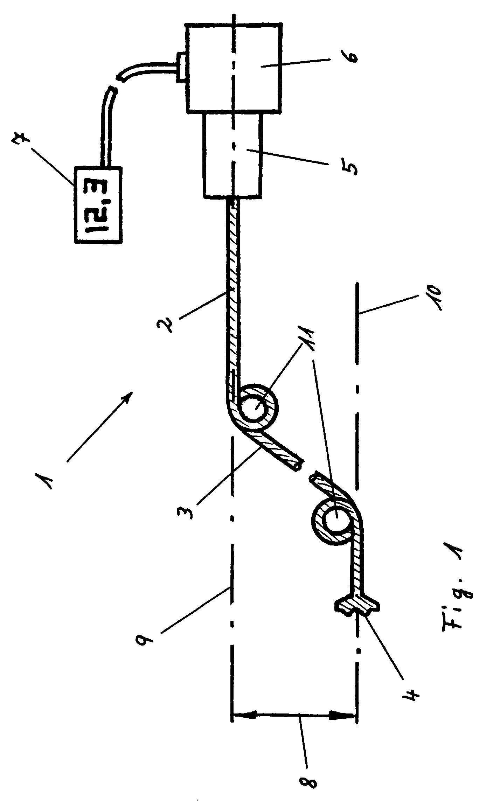

Die Fig. 1 zeigt den prinzipiellen Aufbau einer erfindungsgemäßen Vorrichtung 1 zur Bestimmung von Höhendifferenzen zwischen dem aktiven Teil eines an einem zumindest in einer vertikalen Ebene verschwenkbaren Arm einer Arbeitsmaschine oder -einrichtung angeordneten Werkzeugs oder einer an einem solchen Arm angeordneten Meßanordnung und einer im Raum fest vorgegebenen horizontalen Ebene, die im wesentlichen aus einem mit einer geeigneten Flüssigkeit 2, beispielsweise einer ölartigen Flüssigkeit oder einem flüssigen Metalleutektikummit einer Dichte von $\rho > 1$ $g \cdot cm^{-3}$ oder einer anderen Manometerflüssigkeit bekannter Art, ggf. aber auch nur mit antibakteriell und/oder antikorrosiv präpariertem Wasser oder entsprechenden wässrigen Lösungen, gefüllten Metallrohr 3 besteht, das an seinem jeweils in der unmittelbaren Nachbarschaft des aktiven Teils eines Werkzeugs oder einer Meßanordnung anzuordnenden Ende mit einer Druckausgleichsmembran 4 bekannter Art verschlossen ist und mit seinem anderen Ende in oder an einem Drucksensor 5 ebenfalls bekannter Art mündet. Dem Drucksensor 5 ist eine Verarbeitungs- und/oder Anzeigeeinrichtung 6, beispielsweise - aber nicht zwangsläufig - in Form eines Meßumformers bekannter Art, nachgeschaltet, der im dargestellten Fall die Ausgangssignale des Drucksensors 5 in digitalisierte Längenangaben auf einem Display 7 umwandelt, die die Höhendifferenz 8 zwischen einer horizontal durch den Drucksensor 5 verlaufenden Ebene 9 und einer horizontal durch die Druckausgleichsmembran 4 verlaufenden Ebene 10 in einem vorgegebenen Längenmaß, beispielsweise in m oder cm, angeben.

Selbstverständlich kann eine solche Verarbeitungs- und/oder Anzeigeeinrichtung 6 die Ausgangssignale des Drucksensors 5 zusätzlich zu den digitalisierten Längenangaben auf einem Display 7 oder stattdessen auch zu Steuersignalen für die Beaufschlagung einer halbautomatischen oder automatischen - vorzugsweise auch noch programmierbaren - Steuer- und Regeleinheit für die Betätigung des jeweiligen Werkzeugs oder der jeweiligen Meßanordnung an dem zumindest in einer vertikalen Ebene verschwenkbaren Arm einer Arbeitsmaschine oder -einrichtung umwandeln. Ebenso kann die horizontal durch den Drucksensor 5 verlaufende Ebene 9 ihrerseits durch einen mit Mitteln bekannter Art oder auch einer zweiten der hier beschriebenen erfindungsgemäßen Vorrichtungen 1, dann allerdings vorzugsweise ohne eine zusätzliche Verarbeitungs- und/oder Anzeigeeinrichtung 6, jederzeit feststellbaren Abstand zu einer weiteren im Raum vorgegebenen horizontalen Ebene definiert sein, wobei dieser Abstand dann - wenn gewünscht oder erforderlich - selbstverständlich seinerseits mittels der Verarbeitungs- und/oder Anzeigeeinrichtung 6 als separater oder integrierter Bestandteil in die vorgenannte Digitalanzeige auf dem Display 7 aufgenommen werden kann. Im übrigen ist die gezeigte Vorrichtung 1 nicht nur in dem Fall anwendbar, daß sich die horizontale Ebene 10 durch die Druckausgleichsmembran 4 - wie in Fig. 1 explizit dargestellt - im Bereich unterhalb der horizontalen Ebene 9 durch den Drucksensor 5 befindet, sondern auch dann, wenn sie in den Bereich oberhalb der Ebene 9 gebracht wird.

Zur Verbesserung der Beweglichkeit des Metallrohres 3 weist dieses noch spiralförmig ausgebildete Abschnitte 11 auf, die je nach Belastung eine oder mehrere Windungen ausreichenden Windungsdurchmessers und jeweils eine hinreichende Gesamtlänge aufweisen und deren Längsachse im allgemeinen entweder mit der Drehachse eines benachbarten Gelenkes eines ein Werkzeug tragenden Armes einer Arbeitsmaschine oder -einrichtung oder aber - wenn im wesentlichen nur Längsbewegungewn auszugleichen sind - mit der lokalen Längserstreckung des Metallrohres 3 übereinstimmt. In speziellen Fällen kann - was hier nicht explizit dargestellt, für den Fachmann jedoch auch so verständlich ist - die Beweglichkeit einer erfindungsgemäßen Vorrichtung 1 auch dadurch erhöht werden, daß das Metallrohr 3 als auf eine Trommel ausreichenden Durchmessers auf- bzw. von dieser abwickelbar ausgebildet ist, wobei dann vorteilhafterweise - wenn auch nicht zwangsläufig - der Drucksensor 5 in oder an der Trommel angeordnet wird.

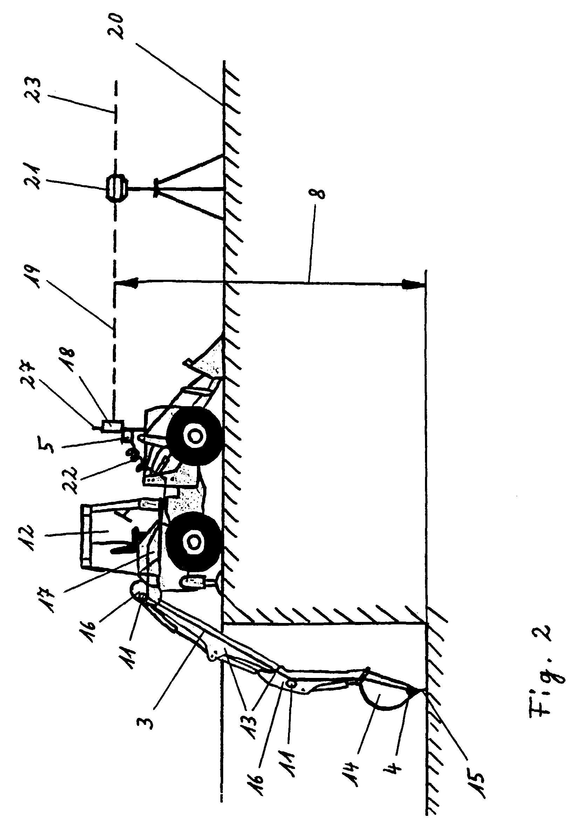

Die Fig. 2 zeigt in teilweise schematischer Darstellung die Verwendung einer erfindungsgemäßen Vorrichtung 1 zur Bestimmung von Höhendifferenzen 8 beim Aushub einer ebenen Geländevertiefung mittels eines Baggers 12, der hier eine mit einem in mindestens einer vertikalen Ebene verschwenkbaren Arm 13 versehene Arbeitsmaschine oder -einrichtung repräsentiert, die an diesem Arm 13 ein steuerbares Werkzeug 14 in Form einer Baggerschaufel mit einem aktiven Teil 15 in Form der zugehörigen Baggerschneide trägt. In unmittelbarer Nachbarschaft dieser Baggerschneide ist an der Außenseite der Baggerschaufel das mit einer Druckausgleichsmembran 4 verschlossene - und ggf. mit einer Schutzabdeckung versehene - Ende eines mit einer geeigneten Flüssigkeit gefüllten Metallrohrs 3 angeordnet, das seinerseits über mehrere spiralförmig ausgebildete Abschnitte 11 im Bereich der Gelenke 16 des Armes 13 parallel zu diesem zum Gehäuse 17 des Baggers 12, an dem der Arm 13 angelenkt ist und von wo er und das von ihm getragene Werkzeug 14 gesteuert werden, und von dort zu einem Drucksensor 5 verläuft. Der Drucksensor 5 ist mit einer Empfangseinrichtung 18 für Lasersignale 19 starr verbunden und mit konstantem Abstand zu dieser auf einer Führung 27 bekannter Art, beispielsweise einer Schiene mit rundem oder mehreckigem Querschnitt, und mit einer Antriebseinrichtung ebenfalls bekannter Art, beispielsweise einem Spindel- oder Kettentrieb, derart verfahrbar, daß die Empfangseinrichtung 18 ständig in der horizontalen Ebene liegt, die von einem ortsfest im Gelände aufgeständerten Baulaser 21 bekannter Art mittels von ihm horizontal rundum ausgestrahlter Lasersignale 19 vorgegeben wird. Zur Erleichterung der Nachfahrbewegung des Drucksensors 5 und der Empfangseinrichtung 18 bezüglich der Lasersignale 19 weist das Metallrohr 3 im Bereich zwischen Gehäuse 17 und Drucksensor 5 neben den spiralförmig ausgebildeten Abschnitten 11 im Bereich der Gelenke 16 einen weiteren spiralförmig ausgebildeten Abschnitt 22 auf, dessen Längsachse im wesentlichen parallel zur lokalen Längserstrekkung des Metallrohrs 3 verläuft.

Die erforderliche Bezugsebene für die Bestimmung von Höhendifferenzen 8 ist hier im übrigen - wie aus der Darstellung ersichtlich - anstelle der gemäß Fig. 1 durch den Drucksensor 5 verlaufenden horizontalen Ebene 9 die durch die Lasersignale 19 vorgegebene horizontale Ebene 23, deren - konstanter - Abstand zum Drucksensor 5 selbstverständlich in die digitale Anzeige auf einem hier aus Gründen der Übersichtlichkeit der Darstellung nicht explizit gezeigten Display 7, das sinnvollerweise als in das Armaturenbrett des Baggers 12 integriert vorausgesetzt werden kann, integrierbar ist. Ebenso sind hier auch die Signalleitung vom Drucksensor 5 zu einem solchen Display 7 sowie die erforderliche Verarbeitungs- und/oder Anzeigeeinrichtung 6 nicht explizit dargestellt, da ihre Funktion zur Unterstützung des Baggerführers ersichtlich bekannt ist.

In der Fig. 2 verwendete Bezugszeichen, die auch schon zur Erläuterung der Fig. 1 verwendet wurden, bezeichnen im übrigen identische oder zumindest gleichwirkende Elemente der gezeigten Anordnung.

Selbstverständlich läßt sich die in Fig. 2 dargestellte Vorrichtung 1 zur Bestimmung von Höhendifferenzen auch dahingehend abwandeln, daß das Metallrohr 3 in zwei getrennte Abschnitte aufgeteilt wird, deren jeder im Bereich der Baggerschneide 15 bzw. im Bereich der Empfangseinrichtung 18 von einer eigenen Druckausgleichsmembran 4 abgeschlossen wird und im Bereich eines gemeinsamen Bezugspunktes, beispielsweise in der Fahrerkabine des Gehäuses 17, in einem eigenen Drucksensor 5 mündet. Die Ausgangssignale beider Drucksensoren 5 werden dann parallel der Verarbeitungs- und/oder Anzeigeeinrichtung 6 aufgegeben, die sinnvollerweise ebenfalls in der vorgenannten Fahrerkabine angeordnet ist und dem Baggerführer mittels geeigneter Addition oder Subtraktion der eingehenden Ausgangssignale der Drucksensoren 5 jederzeit den tatsächlichen vertikalen Abstand zwischen Baggerschneide 15 und vorgegebener horizontaler Ebene 23 angibt, wobei gleichzeitig noch eine halbautomatische oder automatische Unterstüzung der Baggerarbeit erfolgen kann. Eine solche Aufteilung würde bei gleich belastbaren Druckausgleichsmembranen 4 die Verwendung einer Flüssigkeit 2 höherer Dichte in den beiden Abschnitten des Metallrohrs 3 gestatten und damit die Empfindlichkeit der Bestimmung von Höhendifferenzen mit der in Rede stehenden Vorrichtung 1 erhöhen. Auf eine explizite Darstellung einer solchen Ausführungsform der erfindungsgemäßen Vorrichtung 1 wurde hier aus Gründen des Umfangs der vorliegenden Ausführungen allerdings verzichtet.

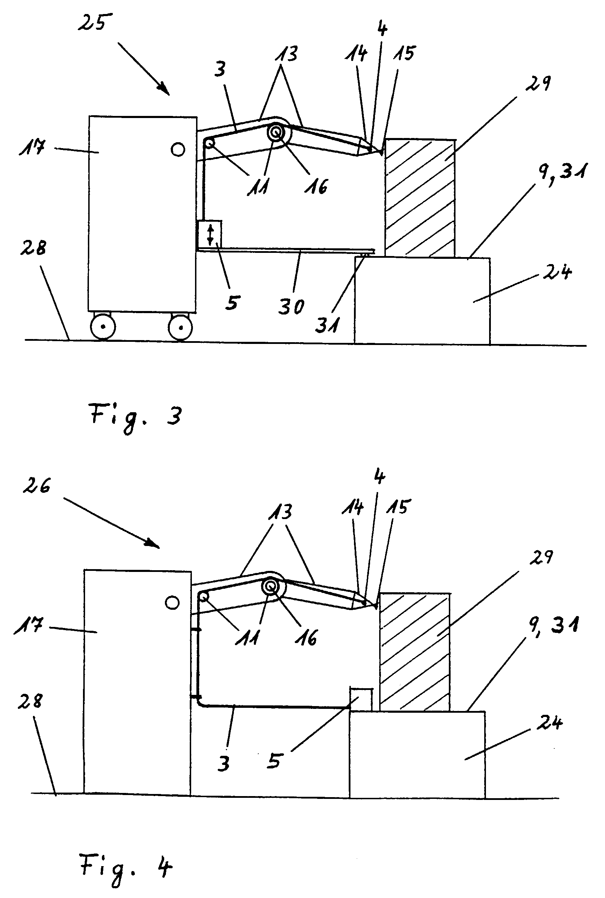

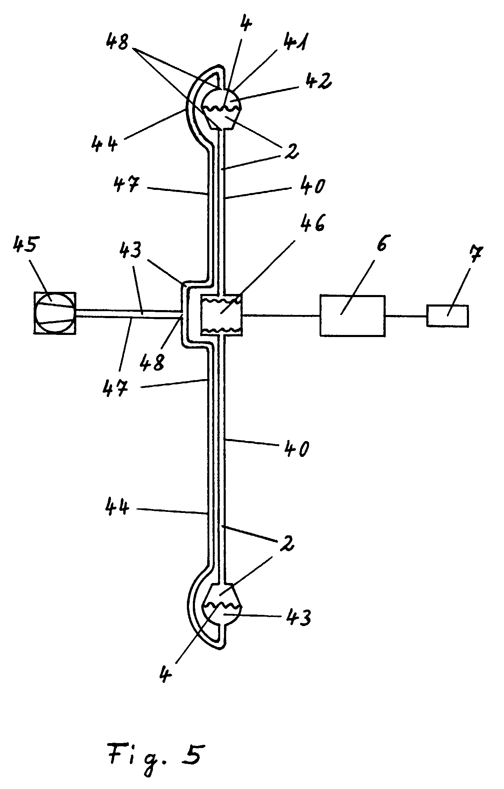

Die Fig. 3 und 4 zeigen in schematischer Darstellung die Verwendung einer erfindungsgemäßen Vorrichtung 1 zur Bestimmung von Höhendifferenzen 8 zur Steuerung des Werkzeugs 14 eines auf einem ebenen Untergrund zwischen mindestens zwei Lager- und/oder Bearbeitungsstationen 24 verfahrbaren Handhabungsautomaten 25 bzw. zur Steuerung des Werkzeugs 14 eines ortsfest gegenüber einer Lager- und/oder Bearbeitungsstation 24 installierten Handhabungsautomaten 26, wobei auch hier bereits in den Fig. 1 und 2 verwendete Bezugszeichen dieselbe Bedeutung haben wie dort.

Im Gegensatz zum Gegenstand der Fig. 2 ist hier in beiden Fällen die eigentliche Bezugsebene ein horizontal planierter und befestigter Untergrund 28, der jedoch stets mit bekannten Mitteln auf eine von einem in einer Lager- und/oder Bearbeitungsstation 24 geparkten Werkstück 29 vorgegebene horizontale Ebene transponiert werden kann, die ihrerseits mit der durch den Drucksensor 5 verlaufenden horizontalen Ebene 9 korrelierbar ist. Im einfachsten Fall kann dies bei einem verfahrbaren Handhabungsautomaten 25 mit Hilfe eines Auslegerarms 30 geschehen, der starr mit dem am Handhabungsautomaten 25 in senkrechter Richtung verfahrbaren - durch den eingezeichneten Doppelpfeil charakterisierten - Drucksensor 5 verbunden ist und von einer geeigneten Ruhelage aus auf die Aufstandsfläche 31 des Werkstücks 29 in der Lager- und/oder Bearbeitungsstation 24 gefahren wird, wobei er die Berührung beispielsweise mittels eines Kontaktschalters 32 bekannter Art registriert und den Drucksensor 5 auf dem erreichten Niveau festhält. Bei einem ortsfesten Handhabungsautomaten 26 kann der Drucksensor 5 dagegen gleich ortsfest auf der Aufstandsfläche 31 des Werkstücks 29 in der Lager- und/oder Bearbeitungsstation 24 angeordnet werden. Sofern die Aufstandsfläche 31 von einer gleichzeitig als Transportmittel dienenden Vorrichtung, beispielsweise einem Förderband oder einer Rollenbahn, gebildet wird, ist in den meisten Fällen in deren Randbereich eine starre Begrenzung vorhanden, die dann als Bezugspunkt dienen kann. Selbstverständlich kann auch jede andere von dem jeweiligen Werkstück 29 vorgegebene Ebene als Bezugspunkt benutzt werden, insbesondere dann, wenn sie auf einfache Weise dauerhaft festlegbar oder mittels sowieso vorhandener Sensoren bekannter Art von Fall zu Fall ohne Schwierigkeiten ermittelbar ist.

Die Fig. 5 zeigt in schematischer Darstellung den prinzipiellen Aufbau einer weiteren Ausführungsform der erfindungsgemäßen Vorrichtung zur Bestimmung von Höhendifferenzen, bei der die Gesamtlänge des erforderlichen mindestens einen rohr- oder schlauchartigen, mit einer Flüssigkeit gefüllten Behälterelements in zwei derartige Behälterelemente aufgetrennt ist, deren jedes an seinem dem anderen Behälterelement abgewandten Ende mit einer Druckausgleichsmembran 4 versehen und an seinem dem anderen Behälterelement zugewandten Ende in einer gemeinsamen Druckdifferenz-Meßeinrichtung 46 endet. Von letzterer ist dabei vorausgesetzt, daß sie die an den beiden in sie mündenden Enden der Behälterelemente, die hier in Form von Kunststoffschläuchen 40 geeigneter physikalischer und chemischer Eigenschaften ausbildet sein sollen, vor der Differenzbildung vorhandenen Druckwerte unabhängig voneinander feststellt, so daß sie im Bedarfsfalle auch durch zwei getrennte, zueinander ortsfest und benachbart angeordnete Drucksensoren der bereits oben angegebenen Art, deren Meßergebnisse dann nachträglich in der bereits bekannten Verarbeitungs- und/oder Anzeigeeinrichtung 6 zur Differenzbildung herangezogen werden können, ersetzbar ist, wobei das Ergebnis - unabhängig von der internen Erzeugung durch Druckdifferenz-Meßeinrichtung 46 und Verarbeitungs- und/oder Anzeigeeinrichtung 6 oder durch zwei getrennte Drucksensoren und Verarbeitungs- und/oder Anzeigeeinrichtung 6 - in dem bereits oben beschriebenen Display 7 angezeigt und/oder einer - vorzugsweise programmierbaren - Steuer- und Regeleinrichtung aufgegeben wird.

Die Druckausgleichsmembranen 4 sind jeweils mit einer druckdichten hohlkörperförmigen Abdeckung 41 versehen, deren Innenraum 42 mit einem unter Druck stehenden flüssigen oder gasförmigen Medium 43, beispielsweise Druckluft, befüllbar ist. Diese Füllung kann einmalig und dauerhaft erfolgen, was einerseits eine sehr aufwendige Abdichtung verlangt und wohl nur bei langfristig konstanter Arbeitsumgebung opportun ist, oder ständig über separate Leitungen 44 aus einer Quelle 45, beispielsweise einem von einer Arbeitsmaschine mitgeführten Kompressor, vorgenommen werden, was einerseits einen geringeren Aufwand hinsichtlich der Abdichtung erfordert und andererseits eine große Flexibilität hinsichtlich der bei unterschiedlichen Einsatzfällen unterschiedlichen Anforderungen an eine sinnvolle Vorspannung der Druckausgleichsmembranen 4 mit sich bringt - insbesondere dann, wenn die Quelle 45 auch noch Steuer- und regelbar ausgebildet ist. Die vorgenannte Vorspannung kann selbstverständlich von Fall zu Fall auch einfach dem Atmosphärendruck der Umgebung entsprechen. Der Vorteil einer derartigen Vorspannung liegt vor allem darin begründet, daß damit die Länge der verwendeten Kunststoffschläuche 40 - oder auch jedes anderen geeigneten rohr- oder schlauchartigen Behälterelements - vergrößert werden kann, ohne daß die Druckausgleichsmembranen 4 wegen des zunehmenden Eigengewichts der in den Behälterelementen eingeschlossenen Flüssigkeit überlastet werden, und wegen des dann erhöhten Innendrucks der in den Behälterelementen eingeschlossenen Flüssigkeit das Eindringen externer Gasmoleküle durch die Wand des jeweiligen Behälterelements, beispielsweise eines Kunststoffschlauchs 40, in diese Flüssigkeit weitgehend verhindert wird.

Von den separaten Leitungen 44 ist hier im übrigen - ohne Beschränkung der Allgemeinheit - ebenfalls vorausgesetzt, daß sie in Form von Kunststoffschläuchen 47 vorliegen, die darüber hinaus auch noch mit den Kunststoffschläuchen 40 jeweils zu einer einteiligen Doppelleitung zusammengefaßt sein können - aber nicht müssen, wobei dann jede der beiden parallelen Leitungsbahnen an jeder gewünschten Stelle separat mit Ein- oder Ausgängen 48 weiterer Bestandteile der vollständigen Vorrichtung, beispielsweise mit dem Ausgang der Quelle 45 oder den Eingängen der Abdeckungen 41 oder den Eingängen der Druckdifferenz-Meßeinrichtung 46, verbindbar ist.

Der Vorteil der in Fig. 5 gezeigten Vorrichtung ist vor allem dann gegeben, wenn beispielsweise von einem für die Anordnung einer Druckmeß- und -auswertungseinheit besonders bevorzugten Ort auf einer Arbeitsmaschine, beispielsweise dem geschützten Fahrerhaus eines Baggers, aus sowohl die ständig wechselnde Entfernung zu einer oberhalb des zu bearbeitenden Geländes - beispielsweise mittels eines Baulasers - definierten horizontalen Ebene als auch die dann ebenfalls ständig variierende Entfernung zu einer unterhalb des Geländeniveaus anzulegenden horizontalen Ebene gemessen werden muß, wobei dann die Druckausgleichsmembran 4 des mit seinem freien Ende nach oben weisenden Behälterelements/Kunststoffschlauchs 40 starr mit einer senkrecht zur Aufstandsfläche des Baggers verfahrbaren Empfangseinrichtung für das Laserlicht und die Druckausgleichsmembran 4 des anderen Behälterelements/Kunststoffschlauchs 40 starr mit der Baggerschaufel im Bereich von deren Schneide verbunden wird. Die Quelle 45 für ein unter Druck stehendes Medium kann dann ebenfalls, beispielsweise in Form eines Druckluftkompressors, im Bereich des Fahrerhauses oder in einem ansonsten geeigneten Bereich auf dem Bagger angeordnet werden.

Im übrigen ist das Schutzbegehren der vorliegenden Gebrauchsmusteranmeldung selbstverständlich nicht auf die explizit beschriebenen Ausführungsbeispiele beschränkt, sondern betrifft alle Vorrichtungen und deren Verwendung, die unter den Schutzumfang des vorliegenden Schutzanspruchs 1 fallen.

## Bezugszeichenliste

| 1 | Vorrichtung zur Bestimmung von Höhendifferenzen |
| 2 | Flüssigkeit |
| 3 | Metallrohr |
| 4 | Druckausgleichsmembran |
| 5 | Drucksensor |
| 6 | Verarbeitungs- und/oder Anzeigeeinrichtung |
| 7 | Display |
| 8 | Höhendifferenz |
| 9, 10, 23, 28 | horizontal verlaufende Ebenen |
| 11, 22 | spiralförmig ausgebildete Abschnitte des Metallrohrs |
| 12 | Bagger |
| 13 | Arm |
| 14 | Werkzeug |
| 15 | aktiver Teil eines Werkzeugs |
| 16 | Gelenke |
| 17 | Gehäuse |
| 18 | Empfangseinrichtung für Lasersignale |
| 19 | Lasersignale |
| 20, 31 | Aufstandsflächen |
| 21 | Baulaser |
| 24 | Lager- und/oder Bearbeitungsstation |
| 25 | verfahrbarer Handhabungsautomat |
| 26 | ortsfester Handhabungsautomat |
| 27 | Führung |
| 29 | Werkstück |
| 30 | Auslegerarm |
| 32 | Kontaktschalter |
| 40, 47 | Kunststoffschläuche |
| 41 | Aodeckung |
| 42 | Innenraum einer Abdeckung |
| 43 | unter Druck stehendes Medium |
| 44 | Leitung für unter Druck stehendes Medium |
| 45 | Quelle eines unter Druck stehenden Mediums |
| 46 | Druckdifferenz-Meßeinrichtung |
| 48 | Ein- oder Ausgänge |

## Patentansprüche

1. Vorrichtung zur Bestimmung von Höhendifferenzen zwischen dem aktiven Teil eines Werkzeugs oder einer Meßanordnung, das oder die steuerbar an einem mindestens in einer vertikalen Ebene willkürlich verfahrbaren und an einem feststehenden oder ebenfalls verfahrbaren Gehäuse angelenkten ein- oder mehrgliedrigen Arm angeordnet ist, und einer mittels Einrichtungen bekannter Art vorgegebenen horizontalen Ebene, die durch einen am Gehäuse oder in definierter räumlicher Zuordnung außerhalb von diesem vorgegebenen Bezugspunkt hindurch- oder in meßbarem senkrechtem Abstand an ihm vorbeiführt,
dadurch gekennzeichnet,
daß zwischen dem Bereich des aktiven Teils (15) des Werkzeugs (14) oder der Meßanordnung und dem Bereich des Bezugspunktes und/oder dem Bereich der vorgegebenen horizontalen Ebene mindestens ein mit einer Flüssigkeit (2) gefülltes, hinreichend bewegliches rohr- oder schlauchartiges Behälterelement (3,40) angeordnet ist, das an seinem dem Bezugspunkt abgekehrten Ende mit einer Druckausgleichsmembran (4) bekannter Art verschlossen ist und mit seinem anderen Ende in einen in der unmittelbaren Umgebung des Bezugspunktes ortsfest zu diesem installierten Drucksensor (5) bekannter Art mündet, dessen Ausgangssignale als Maß für die zu bestimmenden Höhendifferenzen (8) dienen und einer geeigneten Verarbeitungs- und/oder Anzeigeeinrichtung (6) bekannter Art aufgegeben werden.

2. Vorrichtung nach Anspruch 1,
dadurch gekennzeichnet,
daß die horizontale Ebene (23) mittels eines ortsfest im Gelände aufgeständerten Baulasers (21) bekannter Art definiert wird und das Gehäuse (17) Bestandteil einer in diesem Gelände verfahrbaren Arbeitsmaschine (12) ist, die mit einer senkrecht zu ihrer Aufstandsfläche (20) automatisch dem Lasersignal (19) nachfahrenden Empfangseinrichtung (18) ebenfalls bekannter Art versehen ist, wobei diese Empfangseinrichtung (18) starr mit dem Drucksensor (5) verbunden ist, der das einzige rohr- oder schlauchartige Behälterelement (3,40) zwischen dem Bereich des aktiven Teils (15) des Werkzeugs (14) und dem Bereich des in ortsfester räumlicher Zuordnung zur Empfangseinrichtung (18) vorausgesetzten Bezugspunkts in dessen unmittelbarer Umgebung abschließt.

3. Vorrichtung nach Anspruch 1,
dadurch gekennzeichnet,
daß die horizontale Ebene (23) mittels eines ortsfest im Gelände aufgeständerten Baulasers (21) bekannter Art definiert wird und das Gehäuse (17) Bestandteil einer in diesem Gelände verfahrbaren Arbeitsmaschine (12) ist, die mit einer senkrecht zu ihrer Aufstandsfläche (20) automatisch dem Lasersignal (19) nachfahrenden Empfangseinrichtung (18) ebenfalls bekannter Art versehen ist, wobei diese Empfangseinrichtung (18) starr mit der Druckausgleichsmembran (4) verbunden ist, die ein zwischen dem Bereich eines an geeigneter Stelle zwischen Werkzeug (14) und Empfangseinrichtung (18) vorausgesetzten Bezugspunkts und dem Bereich der Empfangseinrichtung (18) angeordnetes zweites rohr- oder schlauchartiges Behälterelement (3,40) an einem seiner Enden verschließt, während dessen anderes Ende im Bereich des Bezugspunkts in der Nachbarschaft eines ein erstes, vom aktiven Teil (15) eines Werkzeugs (14) kommendes rohr- oder schlauchartiges Behälterelement (3,40) abschließenden Drucksensors (5) in einen weiteren Drucksensor (5) bekannter Art mündet, dessen Ausgangssignale ebenfalls der Verarbeitungs- und/oder Anzeigeeinrichtung (6) aufgegeben werden.

4.  Vorrichtung nach Anspruch 1,
    dadurch gekennzeichnet,
    daß die horizontale Ebene durch einen horizontal planierten und befestigten Untergrund (28) verifiziert wird und das Gehäuse (17) Bestandteil eines auf diesem Untergrund (28) verfahrbaren Handhabungsautomaten (25) ist, dessen starr an den Drucksensor (5) gekoppelter Bezugspunkt mittels eines oder mehrerer mechanischer, elektromecha-nischer, elektromagnetischer oder optischer Sen-soren (32) bekannter Art am Gehäuse auf eine durch das zu handhabende oder zu bearbeitende Werkstuck (29) vorgegebene horizontale Vergleichsebene verfahrbar ist.

5.  Vorrichtung nach Anspruch 4,
    dadurch gekennzeichnet,
    daß die durch das zu handhabende oder zu bearbeitende Werkstück (29) vorgegebene horizontale Vergleichsebene durch dessen Unter- oder Oberkante verläuft.

6.  Vorrichtung nach Anspruch 4 oder 5,
    dadurch gekennzeichnet,
    daß der Sensor (32) Bestandteil eines starr mit dem Drucksensor (5) verbundenen und mit diesem am Gehäuse (17) verfahrbaren Auslegerarms (30) ist, der die durch das zu handhabende oder zu bearbeitende Werkstück (29) vorgegebene horizontale Vergleichsebene mittels mechanischer Berührung des Werkstücks (29) oder der dieses tragenden Elemente (31) einer Lager- oder Bearbeitungsstation (24) ermittelt.

7.  Vorrichtung nach Anspruch 1,
    dadurch gekennzeichnet,
    daß die horizontale Ebene durch einen horizontal planierten und befestigten Untergrund (28) verifiziert wird und das Gehäuse (17) Bestandteil eines ortsfest auf diesem Untergrund (28) montierten Handhabungsautomaten (26) ist, wobei als starr an den Drucksensor (5) gekoppelter Bezugspunkt ein willkürlich festlegbarer Ort an oder auf einer ebenfalls auf dem vorgenannten Untergrund (28) in der Nachbarschaft des Handhabungsautomaten (26) ortsfest angeordneten Lager- oder Bearbeitungsstation (24) für zu handhabende oder zu bearbeitende Werkstücke (29) dient, der mindestens für eine Serie solcher Werkstücke (29) eine von diesen jeweils vorgegebene horizontale Vergleichsebene charakterisiert.

8.  Vorrichtung nach Anspruch 7,
    dadurch gekennzeichnet,
    daß die durch die zu handhabenden oder zu bear-beitenden Werkstücke (29) vorgegebene horizon-tale Vergleichsebene durch deren Unter- oder Oberkante verläuft.

9.  Vorrichtung nach Anspruch 7 oder 8,
    dadurch gekennzeichnet,
    daß der Bezugspunkt ein Ort auf einem starren Bereich in der Aufstandsebene (21) der zu handhabenden oder zu bearbeitenden Werkstücke (29) innerhalb der jeweiligen Lager- oder Bearbeitungsstation (24) ist, wobei dieser starre Bereich gleichzeitig den Drucksensor (5) ortsfest hält und trägt.

10. Vorrichtung nach einem der Ansprüche 1 bis 9,
    dadurch gekennzeichnet,
    daß das rohr- oder schlauchartige Behälterelement (3,40) als von einer Trommel ausreichenden Durchmessers ab- bzw. auf eine solche aufwickelbar ausgeführt ist, wobei das ab- und aufwickelbare Ende des rohr- oder schlauchartigen Behälterelements (3,40) durch eine Druckausgleichsmembran (4) abgeschlossen wird.

11. Vorrichtung nach Anspruch 10,
    dadurch gekennzeichnet,
    daß der Drucksensor (5) in oder an der Trommel angeschlagen ist.

12. Vorrichtung nach einem der Ansprüche 1 bis 11,
    dadurch gekennzeichnet,
    daß zur Füllung des rohr- oder schlauchartigen Behälterelements (3,40) eine Flüssigkeit (2) mit einer Dichte von $\rho > 1\ g \cdot cm^{-3}$ verwendet wird.

13. Vorrichtung nach einem der Ansprüche 1 bis 12,
    dadurch gekennzeichnet,
    daß das rohr- oder schlauchartige Behälterelement (3,40) ein Metallrohr (3) ist.

14. Vorrichtung nach Anspruch 13,
dadurch gekennzeichnet,
daß Innen- und Außendurchmesser des Metallrohres (3) so gewählt werden, daß einerseits das Metallrohr (3) bei ausreichender Festigkeit und Stabilität hinreichend bewegbar ist und andererseits bei einer minimalen Menge an Flüssigkeit (2) sowohl das problemlose vollständige Befüllen des Metallrohres (3) mit dieser als auch das Nichtauftreten von Störungen der zu messenden Druckdifferenzen durch Einflüsse von Kapillarkräften sichergestellt wird.

15. Vorrichtung nach einem der Ansprüche 13 bder 14,
dadurch gekennzeichnet,
daß das Metallrohr (3) vor dem Befüllen mit Flüssigkeit (2) evakuiert wird.

16. Vorrichtung nach einem der Ansprüche 13 bis 15,
dadurch gekennzeichnet,
daß das Metallrohr (3) jederzeit im wesentlichen parallel zum Arm (13) verläuft.

17. Vorrichtung nach einem der Ansprüche 13 bis 16,
dadurch gekennzeichnet,
daß das Metallrohr (3) an den Gelenken (16) des Armes (13) jeweils einen um die Drehachse des Gelenkes (16) verlaufenden spiralförmig ausgebildeten Abschnitt (11) hinreichender Länge und Windungszahl sowie hinreichendem Windungsdurchmesser aufweist.

18. Vorrichtung nach einem der Ansprüch 2 oder 3 und einem der Ansprüche 13 bis 17,
dadurch gekennzeichnet,
daß das Metallrohr (3) in der Nachbarschaft des starr mit der Empfangseinrichtung (18) verbundenen Drucksensors (5) oder der starr mit der Empfangseinrichtung (18) verbundenen Druckausgleichsmembran (4) derart geformt ist, daß es die dem Lasersignal (19) folgenden Bewegungen der Empfangseinrichtung (18) nicht behindert.

19. Vorrichtung nach Anspruch 18,
dadurch gekennzeichnet,
daß das Metallrohr (3) in der Nachbarschaft des Drucksensors (5) oder der Druckausgleichsmembran (4) als spiralförmig ausgebildeter Abschnitt (22) mit hinreichender Länge und Windungszahl sowie hinreichendem Windungsdurchmesser geformt ist.

20. Vorrichtung nach einem der Ansprüche 1 bis 12,
dadurch gekennzeichnet,
daß das rohr- oder schlauchartige Behälterelement (3,40) ein Kunststoffschlauch (40) geeigneter Festigkeit, Flexibilität, Temperaturstabilität und Gasundurchlässigkeit ist.

21. Vorrichtung nach einem der Ansprüche 1 bis 20,
dadurch gekennzeichnet,
daß mindestens eine der Druckausgleichsmembranen (4) auf ihrer der Flüssigkeit (2) abgekehrten Seite mit einer druckdichten hohlkörperförmigen Abdeckung (41) versehen ist, deren Innenraum (42) mit einem unter Druck stehenden gasförmigen bder flüssigen Medium (43) beaufschlagbar ist, wobei der so auf die Druckausgleichsmembran (4) ausgeübte Gegendruck gleichzeitig auch dem zugehörigen Drucksensor (5) und/oder der zu diesem gehörenden Verarbeitungs- und/oder Anzeigeeinrichtung (6) in bekannter Art und Weise als meßbarer und/oder rechnerisch zu verarbeitender Referenzwert zur Verfügung gestellt wird.

22. Vorrichtung nach Anspruch 21,
dadurch gekennzeichnet,
daß das unter Druck stehende gasförmige oder flüssige Medium (43) Druckluft ist.

23. Vorrichtung nach einem der Ansprüche 21 oder 22,
dadurch gekennzeichnet,
daß der Innenraum (42) einer Abdeckung (41) über eine separate Leitung (44) mit einer Quelle (45) eines unter Druck stehenden Mediums (43) verbunden ist.

24. Vorrichtung nach Anspruch 23,
dadurch gekennzeichnet,
daß die Quelle (45) steuer- und regelbar ausgebildet ist.

25. Vorrichtung nach einem der Ansprüche 23 oder 24,
dadurch gekennzeichnet,
daß die Innenräume (42) von Abdeckungen (41) mindestens zweier Druckausgleichsmembranen (4) ein und derselben Vorrichtung der in Rede stehenden Ausführungen mit derselben Quelle (44) verbunden und die zugehörigen Drucksensoren (5) zu einer einzigen Druckdifferenz-Meßeinrichtung (46) zusammengefaßt oder durch eine solche ersetzt sind.

26. Vorrichtung nach einem der Ansprüche 23 bis 25,
dadurch gekennzeichnet,
daß jede separate Leitung (44) ebenfalls durch einen Kunststoffschlauch (47) geeigneter Festigkeit, Flexibilität, Temperaturstabilität und Gasundurchlässigkeit verwirklicht wird.

27. Vorrichtung nach Anspruch 26,
dadurch gekennzeichnet,
daß die die rohr- oder schlauchartigen Behälterelemente (4) und die separaten Leitungen (44) ausbildenden Kunststoffschläuche (40,47) als einteilige Doppelleitung ausgebildet sind und verlegt werden, wobei jede der beiden parallelen Leitungsbahnen an jeder gewünschten Stelle separat mit Ein- oder Ausgängen (48) weiterer Bestandteile (42,45,46) der Vorrichtung verbindbar ist.

28. Vorrichtung nach einem der Ansprüche 1 bis 27, dadurch gekennzeichnet, daß die Verarbeitungs- und/oder Anzeigeeinrichtung (6) aus jedem Ausgangssignal eines Drucksensors (5) eine deutlich ablesbare digitale Längenangabe mit oder ohne Einschluß des jeweils durch separate Messung oder konstante Vorgabe bekannten Abstandes zwischen einem oder mehreren in festgelegter Nachbarschaft zueinander angeordneten Drucksensoren (5) und der vorgegebenen horizontalen Ebene auf einem Display (7) im oder am Gehäuse (17) erzeugt.

29. Vorrichtung nach einem der Ansprüche 1 bis 28, dadurch gekennzeichnet, daß die Verarbeitungs- und/oder Anzeigeeinrichtung (6) aus jedem Ausgangssignal eines Drucksensors (5) separat oder parallel zu einer Digitalanzeige auf einem Display (7) ein Steuersignal für eine halbautomatische oder automatische Steuer- und Regeleinrichtung für die Betätigung des Werkzeugs (14) oder einer Meßanordnung erzeugt.

30. Vorrichtung nach Anspruch 29, dadurch gekennzeichnet, daß die Steuer- und Regeleinrichtung programmierbar ist.

Fig. 1

EP 0 927 871 A1

Fig. 2

EP 0 927 871 A1

Fig. 3

Fig. 4

Fig. 5

**Europäisches Patentamt**

## EUROPÄISCHER RECHERCHENBERICHT

Nummer der Anmeldung

EP 98 12 4687

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y<br>A | WO 94 13892 A (NUOTIO MARKO) 23. Juni 1994<br>* Seite 5, Zeile 15 - Zeile 28; Anspruch 1; Abbildungen 1,2 *<br>* Seite 6, Zeile 2 - Zeile 12 *<br>--- | 1<br>13-17,<br>20-22,28 | G01C5/04 |
| Y<br><br><br>A | US 3 815 423 A (GEARHART W) 11. Juni 1974<br>* Spalte 16, Zeile 57 - Spalte 17, Zeile 50 *<br>* Spalte 13, Zeile 18 - Zeile 46; Abbildung 13 *<br>* Spalte 7, Zeile 22 - Zeile 38 *<br><br>* Spalte 8, Zeile 58 - Zeile 66 *<br>--- | 1<br><br><br>12,20,<br>28,29 | |
| A | EP 0 732 565 A (TRACTO TECHNIK) 18. September 1996<br>* das ganze Dokument *<br>--- | 1,10,11,<br>28 | |
| A | EP 0 344 412 A (SCHMIDT PAUL) 6. Dezember 1989<br>* das ganze Dokument *<br>--- | 1 | |
| A | EP 0 145 565 A (DRAINAGE SYNDICAT NAT ENTREP) 19. Juni 1985<br>* Zusammenfassung; Abbildungen 3,4 *<br>----- | 2,3 | RECHERCHIERTE SACHGEBIETE (Int.Cl.6)<br><br>G01C |

Der vorliegende Recherchenbericht wurde für alle Patentansprüche erstellt

| Recherchenort | Abschlußdatum der Recherche | Prüfer |
|---|---|---|
| DEN HAAG | 15. April 1999 | Hunt, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 98 12 4687

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-1999

| Im Recherchenbericht angeführtes Patentdokument | Datum der Veröffentlichung | Mitglied(er) der Patentfamilie | Datum der Veröffentlichung |
|---|---|---|---|
| WO 9413892 A | 23-06-1994 | FI 626 U<br>AU 5468094 A | 24-03-1993<br>04-07-1994 |
| US 3815423 A | 11-06-1974 | KEINE | |
| EP 0732565 A | 18-09-1996 | DE 19508382 A<br>JP 9119830 A | 19-09-1996<br>06-05-1997 |
| EP 0344412 A | 06-12-1989 | DE 3818232 A<br>JP 1321309 A | 07-12-1989<br>27-12-1989 |
| EP 0145565 A | 19-06-1985 | FR 2555624 A<br>CA 1239025 A<br>US 4677555 A | 31-05-1985<br>12-07-1988<br>30-06-1987 |

EPO FORM P0461

Für nähere Einzelheiten zu diesem Anhang : siehe Amtsblatt des Europäischen Patentamts, Nr. 12/82